# EUROPEAN PATENT SPECIFICATION

(11) **EP 2 156 669 B1**
(45) Date of publication and mention of the grant of the patent: **02.08.2017**
(21) Application number: 08760633.1
(22) Date of filing: 06.06.2008
(51) Int. Cl.: H04N 21/438

(54) **SYSTEM AND METHOD FOR REDUCING THE ZAPPING TIME**
SYSTEM UND VERFAHREN ZUR MINIMIERUNG DER UMSCHALTZEIT
SYSTÈME ET PROCÉDÉ SERVANT À RÉDUIRE LE TEMPS DE ZAPPING

(30) Priority: 13.06.2007 FR 0755729
(43) Date of publication of application: 24.02.2010
(73) Proprietor: Thomson Licensing, 92130 Issy-les-Moulineaux (FR)
(72) Inventor: HENRY, Jean-Baptiste, 35520 Melesse (FR); COTTEREAU, Gaetan, 35200 Rennes (FR)
(74) Representative: Huchet, Anne
(86) International application number: PCT/EP2008/057059
(87) International publication number: WO 2008/151987

(56) References cited:
- EP-A- 1 487 215
- EP-A- 1 675 399
- EP-A- 1 755 339
- WO-A-2004/114668
- WO-A-2006/057938
- WO-A-2007/120245
- US-A1- 2005 190 781

## Description

The present invention relates generally to a method for zapping and more particularly to a method to reduce the zapping time between two programmes.

Video distribution via broadband networks uses standard compression systems such as MPEG-2 or JVT/H.264/MPEG AVC. The MPEG standards define the GoP (Group of Pictures). The GoP defines a sequence of I, P, B type pictures. These pictures are also defined in the MPEG standards. The I picture is encoded without reference to any other picture. The P picture is described with respect to preceding pictures. The B picture is described with respect to preceding and following pictures. When a receiver receives a programme, it waits for the reception of an I picture to start decoding. This causes a delay prior to the display of a new film, particularly in the case of zapping. Hence, when zapping time passes before display of the new channel on the screen. This time is divided between the time to fill the reception memory and the time to find a decodable picture in the stream.

Systems exist to improve the decoding time, by adding a stream termed additional whose structure is such that a decodable picture is more rapidly found to be able to display it. This is what is defined in for example the patent application WO2005112465A1. However, this additional stream suffers from the same problem as a normal stream, in that it is necessary to wait for the reception memory to be filled before it can be decoded.

Patent application EP1675399 discloses sending a boost stream after the request for channel switching is received. Upon completion of the boost stream, the service provider joins the client to the multicast stream of the selected channel. The present invention relates to a system and a method suitable to optimize the zapping time in a receiver.

For this purpose, the purpose of the invention is a zapping method comprising, in a video receiver, the reception steps of a zapping command to a new program, registration for the reception of a first stream comprising the new program and a second stream comprising the same program as the first stream, the second stream being suitable to be processed more rapidly than the first stream by the receiver, reception of the first stream and the second stream, the second stream being received delayed in respect of the first stream, the memorization of the first stream during a longer period than the memorization of the second stream, display of the second stream, then display of the first stream in the continuity of the second stream.

According to an embodiment, the memorization time of the first stream is fixed by said receiver according to the time delay between the first stream and the second stream.

According to one embodiment, the programme is transported in a more compressed manner in the second stream than in the first stream.

According to a particular implementation, the receiver receives an indication of the difference between the presentation time of the first stream and the second stream.

Another purpose of the invention is to propose a stream transmission method to a receiver by a video server comprising, in the server, the encoding steps of a content in a first stream, encoding of the same content in a second stream, the second stream being suitable to be processed more rapidly than the first stream by the receiver, and the transmission of the two streams, with a delay of the second stream with respect to the first stream.

According to one embodiment, the encoded content in the second stream is more compressed than the encoded content in the first stream.

The invention also applies to a computer program product comprising program code instructions for the execution of the steps of the method according to the invention, when this program is executed on a computer. "Computer program product" is understood to mean a computer program medium that can consist not only in a storage space containing the program, such as a diskette or cassette, but also a signal, such as an electrical or optical signal.

The invention will be better understood and illustrated by means of the following embodiments and implementations, by no means limiting, with reference to the figures attached in the appendix, wherein:
- figure 1 is a highly diagrammatic representation of a system according to an embodiment of the invention,
- figure 2 is a diagram of a receiver according to an embodiment of the invention,
- figure 3 is a diagram of a server according to an embodiment of the invention,
- figure 4 represents a stream diagram according to an embodiment of the invention, and
- figure 5 is a schematic representation of the rapid zapping principle according to an embodiment of the invention.

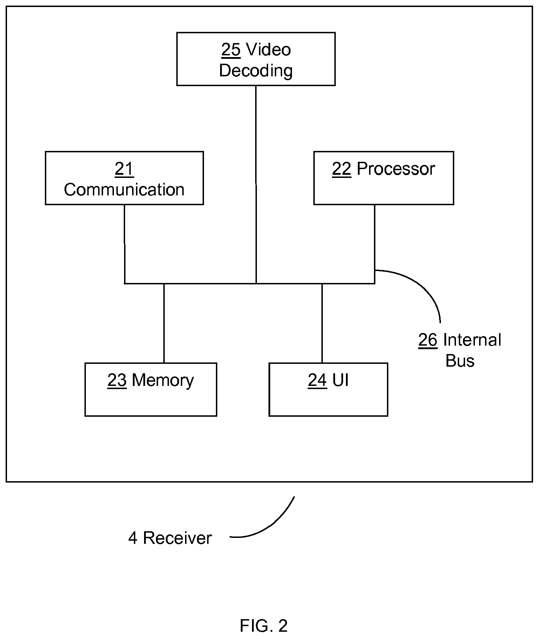

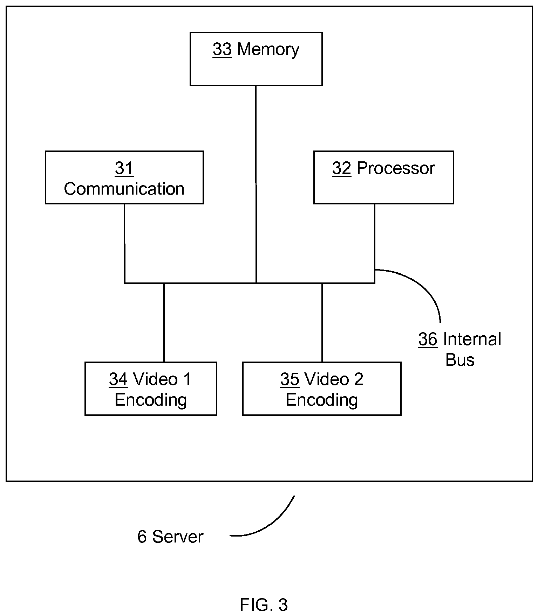

In Figures 2 and 3, the modules shown are functional units that may or may not correspond to physically distinguishable units. For example, these modules or some of them can be grouped together in a single component, or constitute functions of the same software. On the contrary, some modules may be composed of separate physical entities.

The embodiment is situated within the framework of zapping in the modes of compressed content distribution in broadband networks, but the invention is not limited to this particular environment and can be applicable to other contexts where constraints similar to zapping apply.

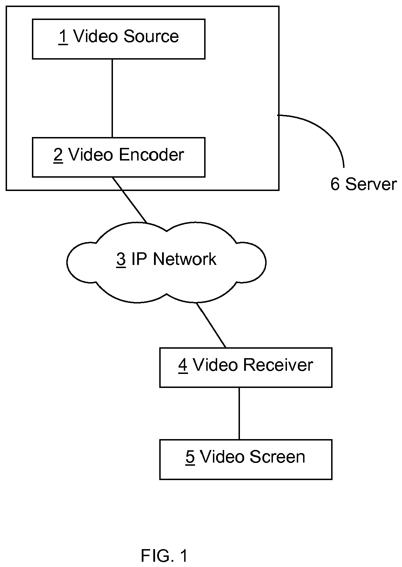

Figure 1 shows a system according to an embodiment of the invention. It comprises a video source 1. The video is encoded by the encoder 2 in the form of two streams: a high quality stream and a low quality stream. The high quality stream is a standard stream, such as an SD or HD stream. The low quality stream is a standard format stream, but it is more compressed than the high quality stream. It is characterized by a shorter GoP than the GoP of the high quality stream. That is it is encoded on a lesser number of packets than the number of packets on which the standard stream is encoded. A server 6 comprises the video source and the encoder. Of course the video source and the encoder can be comprised in distinct devices. The encoder 2 encodes two different streams. This can be carried out by two distinct encoders.

Next the high quality stream is referred to as the standard stream and the low quality stream is referred to as the additional stream. An example of a GoP for the standard stream is IBBPBBPBBPBBI, and the same for the additional stream is IBI. It corresponds to the same data transmitted with a lower number of packets.

The video streams are transmitted to a video receiver 4, such as a set-top-box, via an Internet Protocol 3 type network. The receiver 4 displays the streams received on a video screen 5.

Figure 2 represents a receiver 4 according to the embodiment. The receiver comprises a communication module 21 to send and receive data, particularly on an IP type WAN network. It comprises a memory 23 suitable to memorize the video data received from the WAN network, and a video decoding module 25. In particular, this is an MPEG decoder. The receiver comprises a processor 22 comprising the means of processing the various receiver modules.

The receiver also comprises a user interface 24 that enables reception of zapping requests from a user, which triggers the change of programme. Finally the receiver comprises the means of connection to a screen known in itself, not indicated on the figure.

A server 6, represented in figure 3, comprises two encoders, the video encoding module 34 for the standard stream, and the video encoding module 35 for the additional stream. It also comprises the communication means well known in itself to transmit the streams in multicast mode to the receivers. Naturally, the streams can be transmitted in unicast mode. This means also enables the time delay between the streams to be transmitted to the receivers, as described hereafter. The server also comprises a processor 32 and a memory 33.

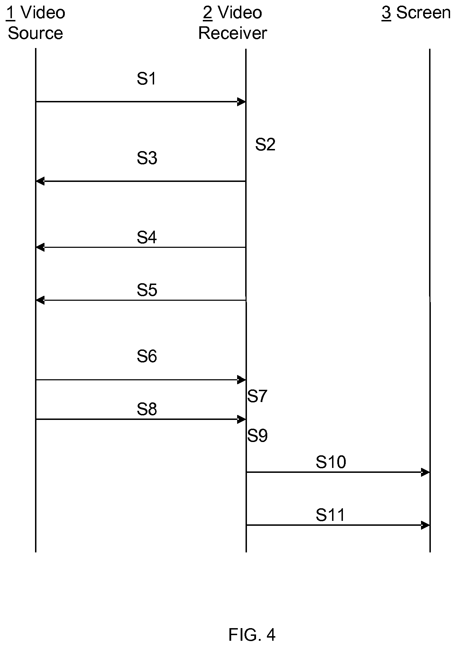

Figure 4 is a sequence diagram that represents the zapping mechanism.

The receiver receives a video stream, step S1. Then from the user interface it receives a request to zap to another program, step S2. A connection procedure takes place, via the IGMP (Internet Group Management Protocol), well known in itself. The IGMP request comprises the multicast IP address of the desired video stream to select the corresponding video service. The receiver carries out an IGMP-leave of old video streams, step S3, then an IGMP-join on the IP multicast addresses of the standard stream and the associated additional stream, steps S4 and S5.

Then the receiver receives the standard stream, step S6, and the additional stream, step S8. These streams are memorized, steps S7 and S9. The additional stream is generally displayed first, step S10. In fact, there is a greater chance of finding an I picture on this additional stream. Then the standard stream is displayed, step S11, as indicated hereafter.

According to the aforementioned GoP examples, only one B type picture is transmitted between each I type picture for an additional stream; whereas for the standard stream, several B and P type pictures are transmitted between two type I pictures. The waiting time between two type I pictures is therefore shorter than in the case of an additional stream.

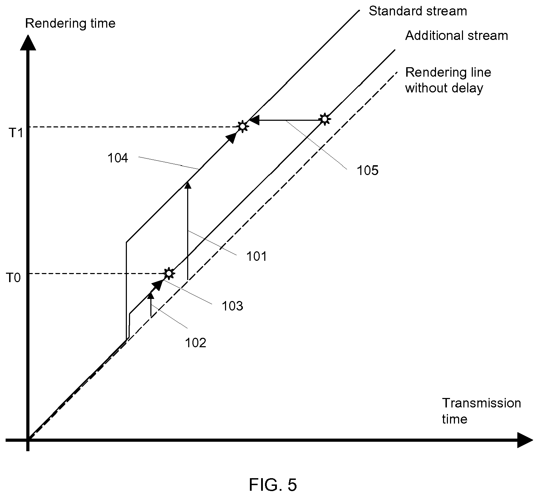

Figure 5 represents the memorization and decoding mechanism in the receiver.

At reception, the standard and additional streams are stored in memory a certain time prior to being decoded. This memorization enables the data received to be stored for a certain time before transmitting it to the decoder. Next the decoder waits to detect a type I picture to start the display.

The memorization time 101 of a standard stream is quite long. In fact, this standard stream is the one that will be processed in a stable manner. It is necessary then that it should be capable of resisting transmission problems. On one hand it compensates for possible jitter effects at reception to prevent stalling. On the other hand it allows having enough data to operate error corrections such as FEC (Forward Error Correction), on a determined set of packets. This memorization takes time, a packet of audio-video data is memorized before being passed to the decoder, which means that it remains stored for a certain period before being usable. This period is lost time, and this makes itself felt particularly when zapping, when a new decoding is started, and it is necessary to wait until the memory is filled before anything can be decoded.

The memorization time 102 of the additional stream is shorter. In fact this stream is useful just a few seconds after the moment of zapping. Its role is not to be viewed permanently. It undergoes less protection than the standard flow, and is more sensitive to jitter. This enables it to pass data to the decoder more rapidly, and hence to reduce the zapping time.

Once the streams have been memorized for a sufficiently long time, they are transmitted to the decoder and the decoding can begin. For the additional stream, the decoding time 103 is faster. In fact the GoP of the additional stream is shorter and the picture I appears more rapidly. At T0, the additional stream can appear on the screen. The decoding time 104 of the standard stream is normally longer. The GoP of the standard stream is longer, the occurrences of I pictures are spaced further apart, and the I picture appears less frequently than in the additional stream. At T1, the standard stream is decoded, and is ready to be displayed on the screen.

The standard stream replaces the additional stream, 105. The handover of the additional stream to the standard stream can be carried out simply by time stamping the two streams on the same time base. Hence, the same picture present in each stream will have the same presentation time. Notably it is the PTS (Presentation Time Stamp), as defined in the MPEG standard.

The memorization time can be illustrated as follows, where the time for a standard stream is one second, and for the additional stream is one hundred milliseconds. Hence, assuming that the two streams are received simultaneously by the receiver, the additional stream is transmitted to the decoder after one hundred milliseconds and the stream is decoded rapidly obtaining a I type picture ready for display. Simultaneously, the standard stream is transmitted to a decoder after one second. It is then decoded. A type I picture is obtained less rapidly than for the additional stream. Once the type I picture is obtained, the standard stream replaces the additional stream on the screen.

As the type I picture is displayed sufficiently early via the additional stream, the memorization time for the standard stream can be increased in order to render the reception more robust against possible transport errors.

According to an embodiment, the standard stream and the additional stream are emitted simultaneously with different presentation times, in particular, different PTS, according to the MPEG standard. That is the streams are offset in time. The PTS of the additional stream, PTS1, is prior to that of the standard flow, PTS2. The additional stream is emitted with a time offset in respect of the standard stream, it is emitted delayed with respect to the standard stream. Hence, when the receiver receives the PTS2 of the standard stream, it receives at the same time the PTS1 of the additional stream corresponding to the PTS1 of the standard stream that was already sent by the server. The difference between PTS1 and PTS2 represents in time the difference in size between the buffers of the standard and additional streams. Hence, when the additional stream has filled its memory, it starts to be decoded (PTS1), while the standard stream is still being memorized. While the additional stream is being decoded, the standard stream fills its memory, until this memory is full and the standard stream starts to be decoded. This PTS2 instant corresponds to that where the additional stream also decodes its PTS2. Hence, when the additional stream is displayed, it is displayed at a moment T0 noticeably subsequent to PTS1. Then during this time, the standard stream is memorized and decoded. When it is displayed, at a moment T1 noticeably subsequent to PTS2, the additional stream displayed corresponds noticeably to the same time T1, and the handover of the additional stream occurs imperceptibly on the screen. The difference between PTS1 and PTS2 enables in fact to compensate for the difference in processing required in the decoder between the standard stream and the additional stream prior to display on the screen.

The server can possibly signal to the receivers the offset that is practiced between the two streams. This can be done particularly during registration of the streams. This enables the receivers to set parameters for the size of the memories dedicated to each of the streams.

The receiver can also itself detect this offset. It can use this offset to dimension the memorization time of the standard stream.

The invention is described in the preceding text as an example. It is understood that those skilled in the art are capable of producing variants of the invention without leaving the scope of the patent.

## Claims

1. Zapping method in a video receiver (4), comprising, in said receiver, the steps of:
- reception (S2) of a zapping command to a new programme,
- request (S4, S5) for the reception of a first stream comprising the new programme and a second stream comprising the same programme as the first stream, the second stream being suitable to be processed more rapidly than the first stream by the receiver,
- reception (S6, S8) of the first stream and the second stream, the second stream being received delayed in respect of the first stream,
- before decoding, memorization (S7, S9) of the first stream during a longer period than the memorization of the second stream, the memorization time of the first stream being fixed by said receiver according to the time delay between the first stream and the second stream,
- display (S10) of the second stream, and
- display (S11) of the first stream in the continuity of the second stream.

2. Method according to one of the aforementioned claim **characterized in that** the programme is transported in a more compressed manner in the second stream than in the first stream.

3. Method according to one of the aforementioned claims, **characterized in that** the receiver receives an indication of the time delay.

4. Method for transmitting a stream to a receiver by a video server (6), comprising, in said server, the steps of:
- encoding of a content in a first stream,
- encoding of the same content in a second stream, the second stream being suitable to be processed more rapidly than the first stream by the receiver,
- transmission of the two streams, with a delay of the second stream with respect to the first stream, said delay representing in time the difference in size between the buffers for memorizing the first stream and the second stream at the receiver before decoding, and
- indication to the receiver of the value of the delay.

5. Method according to claim 5, **characterized in that** the encoded content in the second stream is more compressed than the encoded content in the first stream.

6. Computer program product, comprising program code instructions for executing the steps of the method for zapping according to one of claims 1 to 5 when said program is executed on a video receiver.

## Patentansprüche

1. Verfahren zum Zappen in einem Videoempfänger (4), wobei das Verfahren in dem Empfänger die folgenden Schritte umfasst:
- Empfang (S2) eines Befehls zum Zappen für ein neues Programm,
- Anforderung (S4, S5) für den Empfang eines ersten Datenstroms, der das neue Programm umfasst, und eines zweiten Datenstroms, der dasselbe Programm wie der erste Datenstrom umfasst, wobei der zweite Datenstrom dazu geeignet ist, durch den Empfänger schneller als der erste Datenstrom verarbeitet zu werden,
- Empfang (S6, S8) des ersten Datenstroms und des zweiten Datenstroms, wobei der zweite Datenstrom in Bezug auf den ersten Datenstrom verzögert empfangen wird,
- Speicherung (S7, S9) des ersten Datenstroms während eines längeren Zeitintervalls als die Speicherung des zweiten Datenstroms vor der Decodierung, wobei die Speicherzeit des ersten Datenstroms durch den Empfänger in Übereinstimmung mit der Zeitverzögerung zwischen dem ersten Datenstrom und dem zweiten Datenstrom festgesetzt wird,
- Anzeige (S10) des zweiten Datenstroms, und
- Anzeige (S11) des ersten Datenstroms im Anschluss an den zweiten Datenstrom.

2. Verfahren nach einem der oben erwähnten Ansprüche, **dadurch gekennzeichnet, dass** das Programm in dem zweiten Datenstrom auf stärker komprimierter Weise als in dem ersten Datenstrom transportiert wird.

3. Verfahren nach einem der oben erwähnten Ansprüche, **dadurch gekennzeichnet, dass** der Empfänger eine Angabe der Zeitverzögerung empfängt.

4. Verfahren zum Senden eines Datenstroms an einen Empfänger durch einen Videoserver (6), wobei das Verfahren in dem Server die folgenden Schritte umfasst:
- Codierung eines Inhalts in einem ersten Datenstrom,
- Codierung desselben Inhalts in einem zweiten Datenstrom, wobei der zweite Datenstrom dafür geeignet ist, durch den Empfänger schneller als der erste Datenstrom verarbeitet zu werden,
- Sendung der zwei Datenströme mit einer Verzögerung des zweiten Datenstroms in Bezug auf den ersten Datenstrom, wobei die Verzögerung in der Zeit die Differenz der Größe zwischen den Puffern zum Speichern des ersten Datenstroms und des zweiten Datenstroms bei dem Empfänger vor dem Decodieren repräsentiert, und
- Angabe des Werts der Verzögerung für den Empfänger.

5. Verfahren nach Anspruch 5, **dadurch gekennzeichnet, dass** der codierte Inhalt in dem zweiten Datenstrom stärker als der codierte Inhalt in dem ersten Datenstrom komprimiert ist.

6. Computerprogrammprodukt, das Programmcodeanweisungen zum Ausführen der Schritte des Verfahrens zum Zappen in Übereinstimmung mit einem der Ansprüche 1 bis 5, wenn das Programm in einem Videoempfänger ausgeführt wird, umfasst.

## Revendications

1. Procédé de zapping dans un récepteur vidéo (4), comprenant, dans ledit récepteur, les étapes suivantes :
réception (S2) d'une commande de zapping vers un nouveau programme, demande (S4, S5) de réception d'un premier flux comprenant le nouveau programme et d'un deuxième flux comprenant le même programme que le premier flux, le deuxième flux étant approprié pour être traité plus rapidement que le premier flux par le récepteur, réception (S6, S8) du premier flux et du deuxième flux, le deuxième flux étant reçu en retard par rapport au premier flux, avant décodage, mémorisation (S7, S9) du premier flux sur une période plus longue que la mémorisation du deuxième flux, la durée de mémorisation du premier flux étant fixée par ledit récepteur en fonction du retard entre le premier flux et le deuxième flux,
affichage (S10) du deuxième flux, et
affichage (S11) du premier flux dans la continuité du deuxième flux.

2. Procédé selon l'une des revendications précédentes, **caractérisé en ce que** le programme est transporté d'une manière plus compressée dans le deuxième flux que dans le premier flux.

3. Procédé selon l'une des revendications précédentes, **caractérisé en ce que** le récepteur reçoit une indication du retard.

4. Procédé de transmission d'un flux à un récepteur par un serveur vidéo (6), comprenant, dans ledit serveur, les étapes suivantes :
codage d'un contenu dans un premier flux,
codage du même contenu dans un deuxième flux, le deuxième flux étant approprié pour être traité plus rapidement que le premier flux par le récepteur,
transmission des deux flux, avec un retard du deuxième flux par rapport au premier flux, ledit retard représentant en temps la différence de taille entre les tampons pour la mémorisation du premier flux et du deuxième flux au niveau du récepteur avant décodage, et
indication au récepteur de la valeur du retard.

5. Procédé selon la revendication 5, **caractérisé en ce que** le contenu codé dans le deuxième flux est plus compressé que le contenu codé dans le premier flux.

6. Programme informatique comprenant des instructions de code de programme pour exécuter les étapes du procédé de zapping selon l'une des revendications 1 à 5, lorsque ledit programme est exécuté sur un récepteur vidéo.
